# EUROPÄISCHE PATENTSCHRIFT

(11) **EP 0 414 322 B1**
(45) Veröffentlichungstag und Bekanntmachung des Hinweises auf die Patenterteilung: **07.12.1994**
(21) Anmeldenummer: 90202243.3
(22) Anmeldetag: 21.08.1990
(51) Int. Cl.: G11B 15/44, G11B 15/10, G11B 15/22

(54) **Aufzeichnungs- und/oder Wiedergabegerät für einen bandförmigen Aufzeichnungsträger**
Recording and/or reproducing apparatus for a tape-like recorder
Appareil d'enregistrement et/ou de reproduction pour un support d'information en forme de bande

(30) Priorität: 25.08.1989 AT 2015/89
(43) Veröffentlichungstag der Anmeldung: 27.02.1991
(73) Patentinhaber: Philips Electronics N.V., 5621 BA Eindhoven (NL)
(72) Erfinder: Schafler, Winfried, NL-5656 AA Eindhoven (NL)
(74) Vertreter: Cuppens, Hubertus Martinus Maria

(56) Entgegenhaltungen:
- EP-A- 0 263 444
- DE-A- 3 108 296
- FR-A- 1 556 750
- GB-A- 2 002 947
- GB-A- 2 005 897

## Beschreibung

Die Erfindung betrifft ein Aufzeichnungs- und/oder Wiedergabegerät für einen bandförmigen Aufzeichnungsträger, der zwischen zwei nebeneinanderliegenden, rotierend antreibbaren Wickelkernen verläuft, mit zwei zum Antreiben der Wickelkerne vorgesehenen, rotierend antreibbaren Wickeldornen und mit zwei je mit einem der beiden Wickeldorne in Antriebsverbindung stehenden, nebeneinanderliegenden Reibrädern, die umfangsseitig von einem rotierend antreibbaren, kraftschlüssig wirksamen Antriebsteil wahlweise antreibbar sind, der auf einem mittig bezüglich der beiden Reibräder angeordneten verschwenkbaren Träger drehbar gelagert ist und der durch Verschwenken des Trägers wahlweise mit einem der beiden Reibräder umfangsseitig in kraftschlüssige Antriebsverbindung bringbar ist und der bei hergestellter kraftschlüssiger Antriebsverbindung unter Federkraft an dem betreffenden Reibrad anliegt. Ein solches Gerät ist beispielsweise aus der DE-OS 23 48 941 bekannt.

Bei dem bekannten Gerät ist der Träger für den durch ein Reibrad gebildeten Antriebsteil um ein einziges Schwenklager verschwenkbar und bei mit einem der beiden mit den Wickeldornen in Antriebsverbindung stehenden Reibräder in kraftschlüssiger Antriebsverbindung stehendem Antriebsteil schließen eine Ebene durch die Achse des Antriebsteiles und die Achse des Schwenklagers des Trägers und eine Ebene durch die Achse des Antriebsteiles und die Achse des betreffenden Reibrades einen stumpfen, also einen mehr als 90° betragenden, Winkel ein. Die Kraftübertragungsverhältnisse zwischen dem Antriebsteil und den Reibrädern sind bei diesem bekannten Gerät erstens von der Federkraft abhängig, mit der der Antriebsteil an dem betreffenden Reibrad anliegt, und zweitens auch von Einzieheffekten, die aufgrund des vorerwähnten stumpfen Winkels auf den Antriebsteil einwirken und die bestrebt sind, diesen Winkel zu vergrößern. Diese Einzieheffekte sind vom Reibungskoeffizienten zwischen den Reibpartnern abhängig, der sich aber über die Lebensdauer gesehen verändert, nämlich relativ stark abnimmt. Hiedurch ändern sich über die Lebensdauer gesehen die Kraftübertragungsverhältnisse insgesamt, und zwar nimmt die Kraftübertragung vom Antriebsteil zu den beiden Reibrädern mit der Zeit relativ stark ab. Somit sind über die Lebensdauer gesehen keine gleichbleibend guten Kraftübertragungsverhältnisse gewährleistet, was im Hinblick auf einen stets gleichbleibend guten Antrieb der beiden Reibräder und damit des Aufzeichnungsträgers ungünstig ist. Diese Einzieheffekte sind zusätzlich auch von Belastungsschwankungen an dem jeweils angetriebenen Reibrad, die von dem über das Reibrad angetriebenen Wickelkern herrühren, abhängig, was zu einem von den sich ändernden Einzieheffekten abhängigen ungleichmäßigen Antrieb des betreffenden Reibrades und damit des Aufzeichnungsträgers führt.

Die Erfindung hat sich zur Aufgabe gestellt, ein Gerät der eingangs angeführten Gattung so auszubilden, daß die vorstehend angeführten Schwierigkeiten vermieden sind und somit stets gleichbleibend gute Kraftübertragungsverhältnisse zwischen dem Antriebsteil und den beiden Reibrädern sowie ein gleichmäßiger Antrieb der Reibräder gewährleistet sind. Hiefür ist die Erfindung dadurch gekennzeichnet, daß der Träger um zwei mit Abstand voneinander liegende verstellbare Schwenklager verschwenkbar ist, von denen jedes Schwenklager einem der beiden Reibräder zugeordnet ist, und daß bei mit einem der beiden Reibräder in kraftschlüssiger Antriebsverbindung stehendem Antriebsteil eine Ebene durch die Achse des Antriebsteiles und die Achse des dem betreffenden Reibrad zugeordneten Schwenklagers des Trägers im wesentlichen senkrecht zu einer Ebene durch die Achse des Antriebsteiles und die Achse des betreffenden Reibrades verläuft. Auf diese Weise ist erreicht, daß der Antriebsteil an jedem der beiden Reibräder unter einem rechten Winkel angreift und daher auf den Antriebsteil keine von dem sich über die Lebensdauer gesehen verändernden Reibungskoeffizienten zwischen den Reibpartnern und von Belastungsschwankungen an den Reibrädern abhängige Einzieheffekte einwirken. Die Kraftübertragungsverhältnisse zwischen dem Antriebsteil und den beiden Reibrädern sind auf diese Weise im wesentlichen nur durch die Federkraft bestimmt, mit der der Antriebsteil an dem betreffenden Reibrad anliegt. Da diese Federkraft aber über die Lebensdauer gesehen praktisch unverändert gleich groß bleibt, sind somit stets gleichbleibend gute Kraftübertagungsverhältnisse gewährleistet, so daß eine stets gleichbleibende Kraftübertragung auf die beiden Reibräder und damit ein stets einwandfreier Antrieb des Aufzeichnungsträgers erreicht wird.

Die Ausbildung der verstellbaren Schwenklager des Trägers und die Verstellung dieser Schwenklager und damit des Trägers kann auf verschiedene Weise erfolgen. Beispielsweise kann jedes Schwenklager einen Lagerstift aufweisen, der in eine Lagerbohrung am Träger ragt, wobei der Lagerstift zur Verstellung des betreffenden Schwenklagers an einem verschiebbar und verschwenkbar gelagerten Verstellschieber angebracht ist, der über eine Verstellfeder von einem Betätigungsorgan her verstellbar ist. Als besonders vorteilhaft hat sich aber erwiesen, wenn die beiden verstellbaren Schwenklager des Trägers je durch einen im Querschnitt im wesentlichen V-förmigen Ansatz des Trägers und einen diesem zugeordneten, im Querschnitt nockenförmigen Wellenabschnitt einer das Verstellen der Schwenklager und damit des Trägers steuernden Steuerwelle gebildet sind, die parallel zu einer Ebene durch die Achsen der beiden Reibräder und senkrecht zu diesen Achsen verlaufend im Gerät drehbar gelagert ist, die Ansätze des Trägers durch mindestens eine an dem Träger angreifende Feder zu den ihnen zugeordneten nockenförmigen Wellenabschnitten der Steuerwelle hin belastet sind und die Steuerwelle aus einer Ausgangslage, in der beide Ansätze des Trägers an den ihnen zugeordneten nockenförmigen Wellenabschnitten anliegen und der Antriebsteil von den beiden Reibrädern abgehoben ist, in zwei Betriebslagen verdrehbar ist, in denen je ein Ansatz des Trägers von dem ihm zugeordneten nockenförmigen Wellenabschnitt abgehoben ist und der andere Ansatz des Trägers an dem ihm zugeordneten Wellenabschnitt anliegt und der Antriebsteil an dem Reibrad anliegt, das dem Schwenklager zugeordnet ist, dessen Ansatz an dem ihm zugeordneten Wellenabschnitt anliegt. Auf diese Weise wird eine sowohl hinsichtlich der Ausbildung der verstellbaren Schwenklager des Trägers als auch der Verstellung dieser Schwenklager und damit des Trägers besonders einfache und toleranzunempfindliche Ausführung erreicht.

In diesem Zusammenhang hat sich als besonders vorteilhaft erwiesen, wenn der Träger im wesentlichen U-förmig ausgebildet ist und zwei senkrecht zu der Ebene durch die Achsen der beiden Reibräder verlaufende Schenkelabschnitte und mindestens einen die beiden Schenkelabschnitte miteinander verbindenden, in Richtung der Achsen der beiden Reibräder verlaufenden Stegabschnitt aufweist, die Steuerwelle zwischen den beiden Schenkelabschnitten des Trägers und benachbart zu dem Stegabschnitt des Trägers angeordnet ist und die beiden im wesentlichen V-förmigen Ansätze des Trägers an dem Stegabschnitt des Trägers vorgesehen sind. Auf diese Weise ist eine besonders kompakte und betriebssichere Ausbildung erreicht, die zusätzlich hinsichtlich einer guten Lagerung des Antriebsteiles vorteilhaft ist, weil der Antriebsteil zweifach in den beiden Schenkelabschnitten des Trägerteiles drehbar gelagert werden kann.

Bei einem solchen erfindungsgemäßen Gerät mit einem U-förmig ausgebildeten Träger hat sich als besonders vorteilhaft erwiesen, wenn die Steuerwelle zusätzlich mindestens einen kreisscheibenförmigen Wellenabschnitt mit gegenüber der Steuerwelle größerem Durchmesser aufweist, an dem der Träger zu seiner Positionierung in Richtung der Achsen der beiden Reibräder mit mindestens einem seiner beiden Schenkelabschnitte anliegt. Auf diese Weise wird die Steuerwelle mit ihrem mindestens einen kreisscheibenförmigen Wellenabschnitt zusätzlich für Positionierzwecke zur Positionierung des Trägers ausgenützt.

Weiters hat sich als vorteilhaft erwiesen, wenn eine verstellbare Arretiereinrichtung zum Arretieren der Steuerwelle in ihrer Ausgangslage vorgesehen ist, mit der in der Ausgangslage der Steuerwelle dieselbe gegen Verdrehen arretierbar ist. Hiedurch kann die Steuerwelle auf einfache Weise in ihrer Ausgangslage blockiert werden, wodurch der Antriebsteil sicher außer Antriebsverbindung von den beiden Reibrädern gehalten werden kann.

Dabei hat sich als besonders vorteilhaft erwiesen, wenn die Arretiereinrichtung durch einen zwei Bremsflächen zum Bremsen der beiden Reibräder aufweisenden verstellbaren Bremsteil für die beiden Reibräder gebildet ist, mit dem bei von den Reibrädern abgehobenen Bremsflächen die Steuerwelle gegen Verdrehen arretierbar ist und der bei an die Reibräder angelegten Bremsflächen die Steuerwelle zum Verdrehen freigibt. Auf diese Weise ist erreicht, daß die Steuerwelle nur dann zur Verstellung in eine ihrer beiden Betriebslagen freigegeben wird, wenn zuerst die Bremsflächen an die Reibräder angelegt werden und daher die Reibräder zum Zeitpunkt des Anlegens des Antriebsteiles an eines derselben abgebremst sind. Somit kann der Antriebsteil nur bei zuerst abgebremsten Reibrädern mit einem derselben in Antriebsverbindung gebracht werden, was hinsichtlich einer möglichst geringen Belastung dieser Bauteile und des über die Reibräder und die Wickeldorne angetriebenen Aufzeichnungsträgers vorteilhaft ist. Nachdem die Reibräder zuerst abgebremst und der Antriebsteil mit einem derselben in Antriebsverbindung gebracht wurde, werden danach die Bremsflächen durch entsprechendes Verstellen des Bremsteiles wieder von den Reibrädern abgehoben, wonach eines der beiden Reibräder von dem Antriebsteil her angetrieben werden kann.

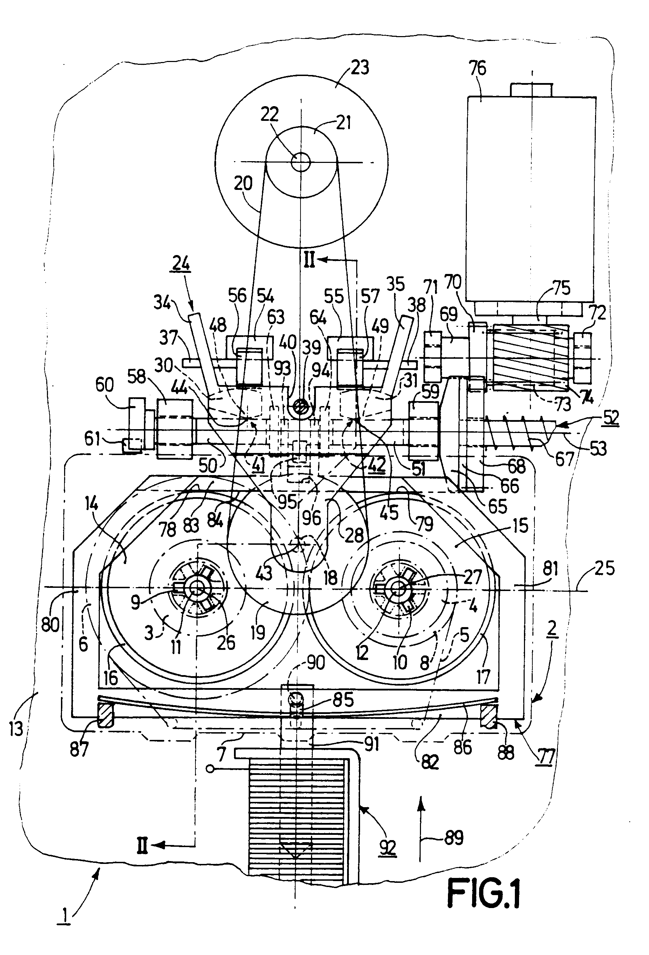

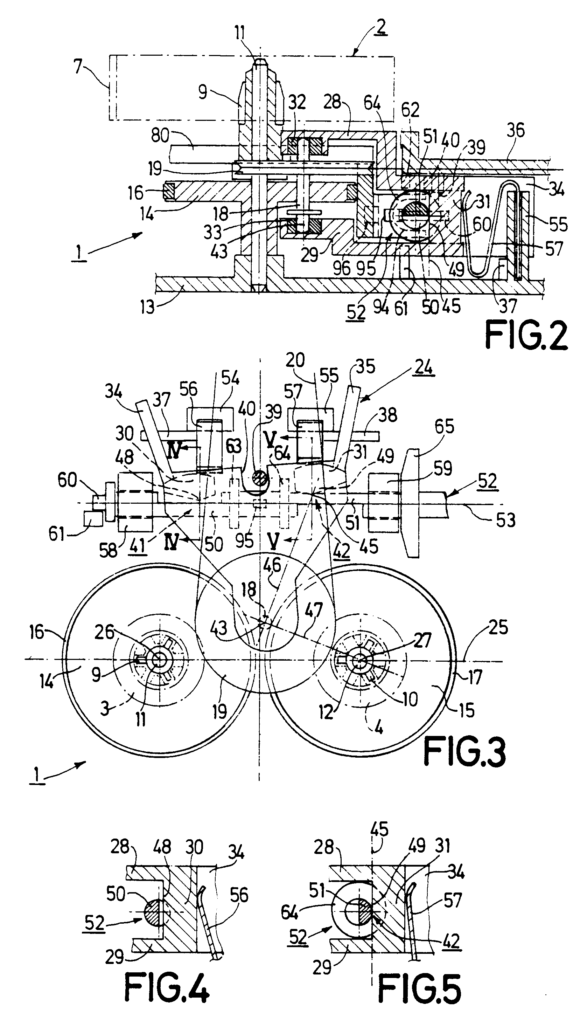

Die Erfindung wird im folgenden anhand eines in den Zeichnungen dargestellten Ausführungsbeispieles, auf das sie jedoch nicht beschränkt sein soll, näher beschrieben. Die Fig.1 zeigt schematisch in Draufsicht einen für die Erfindung wesentlichen Teil eines als Magnetbandgerät ausgebildeten Aufzeichnungs- und Wiedergabegerätes, in das eine Kassette mit zwei nebeneinanderliegenden Wickelkernen einsetzbar ist und das zum Antreiben der Wickelkerne zwei Wickeldorne aufweist, die je mit einem Reibrad verbunden sind, die umfangsseitig mittels einer Antriebswelle kraftschlüssig antreibbar sind, wobei die Antriebswelle auf einem Träger drehbar gelagert ist, der um zwei mit Abstand voneinander liegende verstellbare Schwenklager verschwenkbar ist und der gemäß Fig.1 eine neutrale Mittelposition einnimmt. Die Fig.2 zeigt einen Teil des Gerätes gemäß Fig.1 in einem Schnitt längs der Linie II-II in Fig.1. Die Fig.3 zeigt auf analoge Weise wie die Fig.1 eine Draufsicht auf einen Teil des Gerätes gemäß Fig.1, wobei der Träger eine Betriebsposition einnimmt, in der die auf dem Träger drehbar gelagerte Antriebswelle an einem der beiden Reibräder anliegt. Die Fig.4 zeigt in einem Schnitt längs der Linie IV-IV in Fig.3 ein Detail des Gerätes gemäß Fig.1. Die Fig.5 zeigt in einem Schnitt längs der Linie V-V in Fig.3 ein weiteres Detail des Gerätes gemäß Fig.1.

In den Figuren 1 und 2 ist schematisch ein Teil eines Magnetbandgerätes 1 dargestellt, in das eine mit strichpunktierten Linien angedeutete Kassette 2 einsetzbar ist, wofür das Gerät eine nicht dargestellte wannenförmige Kassettenaufnahme aufweist. Die Kassette 2 enthält zwei nebeneinanderliegende, zwischen den Hauptwänden der Kassette drehbar gelagerte, rotierend antreibbare Wickelkerne 3 und 4, zwischen denen ein Magnetband 5 verläuft. Das Magnetband 5 ist dabei von einem auf den Wickelkern 3 aufgewickelten Bandwickel 6 längs einer langen Kassettenschmalseite 7 zu einem auf den Wickelkern 4 aufgewickelten Bandwickel 8 geführt. In der langen Kassettenschmalseite 7 sind zwei Durchbrüche vorgesehen, durch die hindurch nicht dargestellte Magnetköpfe zum Aufzeichnen und Wiedergeben sowie zum Löschen von Informationssignalen, beispielsweise Sprachsignalen, auf dem beziehungsweise von dem Magnetband mit dem Magnetband in Abtastverbindung stehen. Zum Abtasten des Magnetbandes ist dasselbe bei vorliegendem Gerät in einer Betriebsart "Normaler Vorlauf" und in einer Betriebsart "Normaler Rücklauf", die auch "Reverse-Lauf" genannt wird, in entgegengesetzten Bandlaufrichtungen an den Magnetköpfen entlang antreibbar, wobei das Antreiben des Magnetbandes entweder durch Antreiben des Wickelkernes 4 mit konstanter Drehzahl oder durch Antreiben des Wickelkernes 3 mit konstanter Drehzahl erfolgt. Beim Antreiben des Magnetbandes über den Wickelkern 4 in der Betriebsart "Normaler Vorlauf" erfolgt das Aufzeichnen, Wiedergeben und Löschen von Informationssignalen in einer ersten Spur des Magnetbandes und beim Antreiben des Magnetbandes über den Wickelkern 3 in der Betriebsart "Reverse-Lauf" erfolgt das Aufzeichnen, Wiedergeben und Löschen von Informationssignalen in einer zweiten Spur des Magnetbandes.

Zum Antreiben der Wickelkerne 3 und 4 weist das Gerät 1 zwei Wickeldorne 9 und 10 auf, die je mit einer Welle 11 bzw. 12 drehfest verbunden sind, wobei die Wellen 11 und 12 in einem im wesentlichen plattenförmigen Hauptchassis 13 drehbar gelagert sind. Mit jeder Welle 11 bzw. 12 ist drehfest ein Reibrad 14 bzw. 15 verbunden. Jedes Reibrad 14 bzw. 15 ist umfangsseitig mit einem Gummibelag 16 bzw. 17 versehen, der in eine umfangsseitige Nut jedes Reibrades eingesetzt ist und der zur Erzielung einer guten Reibwirkung vorgesehen ist. Zum umfangsseitigen Antreiben der beiden Reibräder 14 und 15 weist das Gerät 1 eine kraftschlüssig wirksame, motorisch rotierend antreibbare Antriebswelle 18 auf. Die Antriebswelle 18 ist mit einem Pesenrad 19 drehfest verbunden. Das Pesenrad 19 steht über eine Pese 20 mit einem weiteren Pesenrad 21 in Antriebsverbindung. Das weitere Pesenrad 21 sitzt drehfest auf einer Motorwelle 22 eines an dem Hauptchassis 13 befestigten, wahlweise in entgegengesetzten Drehrichtungen mit konstanter Drehzahl rotierend antreibbaren Motors 23. Von dem Motor 23 ist über die beschriebene Antriebsverbindung die Antriebswelle 18 wahlweise in entgegengesetzten Drehrichtungen mit konstanter Drehzahl antreibbar.

Die Antriebswelle 18 ist auf einem mittig bezüglich der beiden Reibräder 14 und 15 angeordneten verschwenkbaren Träger 24 drehbar gelagert. Der Träger 24 ist aus einer in Fig.1 dargestellten neutralen Mittelposition wahlweise in entgegengesetzten Schwenkrichtungen in zwei Betriebspositionen verschwenkbar, von denen eine in Fig.3 dargestellt ist. Durch Verschwenken des Trägers 24 aus seiner Mittelposition in eine seiner beiden Betriebspositionen ist die auf dem Träger 24 drehbar gelagerte Antriebswelle 18 wahlweise mit einem der beiden Reibräder 14 und 15 umfangsseitig in kraftschlüssige Antriebsverbindung bringbar, wie dies aus Fig.3 ersichtlich ist, wobei die Antriebswelle 18 mit dem Reibrad 15 in kraftschlüssiger Antriebsverbindung steht. Bei hergestellter kraftschlüssiger Antriebsverbindung liegt die Antriebswelle 18 unter Federkraft an dem betreffenden Reibrad 14 bzw. 15 an, was nachfolgend noch näher beschrieben ist.

Der Träger 24 ist im wesentlichen U-förmig ausgebildet. Der Träger 24 weist zwei senkrecht zu einer mit einer strichpunktierten Linie angegebenen Ebene 25 durch die Achsen 26 und 27 der beiden Reibräder 14 und 15 verlaufende, gekröpft ausgebildete Schenkelabschnitte 28 und 29 und zwei die beiden Schenkelabschnitte 28 und 29 miteinander verbindende, in Richtung der Achsen 26 und 27 der beiden Reibräder 14 und 15 verlaufende Stegabschnitte 30 und 31 auf. In jedem der beiden Schenkelabschnitte 28 und 29 ist im Bereich von deren freien Enden ein Lager 32 und 33 vorgesehen, in denen die Antriebswelle 18 drehbar gelagert ist. Dadurch ist die Antriebswelle 18 vorteilhafterweise zweifach gelagert. Der Träger 24 weist in seinem von der Antriebswelle 18 abgewandten Bereich zwei Fortsätze 34 und 35 auf, mit denen der Träger 24 zwischen einem nur in Fig.2 dargestellten, weiteren plattenförmigen Zusatzchassis 36 und zwei vom Hauptchassis 13 senkrecht abstehenden Positionierfortsätzen 37 und 38 in seiner höhenmäßigen Position, also in seiner Position in Richtung der Achsen 26 und 27 der beiden Reibräder 14 und 15, positioniert wird. Zur seitlichen Positionierung des Trägers 24 ragt ein von dem Zusatzchassis 36 in Richtung zum Hauptchassis 13 abstehender Positionierstift 39 mit Spiel in eine U-förmige Positionierausnehmung 40, die im Schenkelabschnitt 28 des Trägers 24 vorgesehen ist. In den Figuren 1 und 3 ist das Spiel zwischen dem Positionierstift 39 und der Positionierausnehmung 40 der Deutlichkeit halber vergrößert dargestellt.

Der Träger 24 ist nunmehr um zwei mit Abstand voneinander liegende verstellbare Schwenklager 41 und 42 verschwenkbar, von denen jedes Schwenklager 41 bzw. 42 einem der beiden Reibräder 14 und 15 zugeordnet ist. Das Schwenklager 41 ist dem Reibrad 14 und das Schwenklager 42 dem Reibrad 15 zugeordnet. Die Anordnung der beiden Schwenklager 41 und 42 im Gerät 1 ist so gewählt, daß bei mit einem der beiden Reibräder 14 und 15 in kraftschlüssiger Antriebsverbindung stehender Antriebswelle 18 eine Ebene durch die Achse 43 der Antriebswelle 18 und die Achse 44 bzw. 45 des dem betreffenden Reibrad 14 bzw. 15 zugeordneten Schwenklagers 41 bzw. 42 des Trägers 24 im wesentlichen senkrecht zu einer Ebene durch die Achse 43 der Antriebswelle 18 und die Achse 26 bzw. 27 des betreffenden Reibrades 14 bzw. 15 verläuft. In Fig.3 ist diese Situation für eine Betriebsposition des Trägers 24 dargestellt, in der sich die Antriebswelle 18 in kraftschlüssiger Antriebsverbindung mit dem Reibrad 15 befindet. Dabei ist die Ebene durch die Achse 43 der Antriebswelle 18 und die Achse 45 des dem Reibrad 15 zugeordneten Schwenklagers 42 mit dem Bezugszeichen 46 und die Ebene durch die Achse 43 der Antriebswelle 18 und die Achse 27 des Reibrades 15 mit dem Bezugszeichen 47 bezeichnet. Die beiden Ebenen 46 und 47 schließen einen rechten Winkel ein. Die analogen Verhältnisse liegen vor, wenn die Antriebswelle 18 mit dem Reibrad 14 in kraftschlüssiger Antriebsverbindung steht. In diesem Fall schließen dann eine Ebene durch die Achse 43 der Antriebswelle 18 und die Achse 44 des dem Reibrad 14 zugeordneten Schwenklagers 41 und eine Ebene durch die Achse 43 der Antriebswelle 18 und die Achse 26 des Reibrades 14 einen rechten Winkel ein. Hiedurch ist vorteilhafterweise erreicht, daß die Antriebswelle 18 an jedem der beiden Reibräder 14 bzw. 15 unter einem rechten Winkel angreift, so daß auf die Antriebswelle 18 keine vom Reibungskoeffizienten zwischen den Reibpartnern und von Belastungsschwankungen an den Reibrädern abhängige Einzieheffekte oder Wegdrängeffekte einwirken. Hiedurch sind über die Lebensdauer gesehen stets gleichbleibend gute Kraftübertragungsverhältnisse zwischen der Antriebswelle 18 und den Reibrädern 14 bzw. 15 gewährleistet, so daß eine stets gleichbleibende Kraftübertragung auf die beiden Reibräder 14 und 15 und damit ein über die gesamte Lebensdauer stets einwandfreier Antrieb des Magnetbandes 5 in jeder seiner beiden Bandlaufrichtungen erreicht wird.

Die beiden verstellbaren Schwenklager 41 und 42 des Trägers 24 sind auf besonders einfache Weise je durch einen im Querschnitt im wesentlichen V-förmigen Ansatz 48 bzw. 49 des Trägers 24, welche beiden Ansätze 48 und 49 an den Stegabschnitten 30 und 31 des Trägers 24 vorgesehen sind, und einen diesem zugeordneten, im Querschnitt nockenförmigen Wellenabschnitt 50 bzw. 51 einer das Verstellen der Schwenklager 41 und 42 und damit des Trägers 24 steuernden Steuerwelle 52 gebildet. Die nockenförmigen Wellenabschnitte 50 und 51 sind im Querschnitt halbkreisförmig ausgebildet. Bei der in den Figuren 1 und 2 dargestellten Situation liegt der halbkreisförmige Wellenabschnitt 50 der Steuerwelle 52 im wesentlichen über der Achse 53 der Steuerwelle 52 und liegt der halbkreisförmige Wellenabschnitt 51 der Steuerwelle 52 im wesentlichen unter der Achse 53 der Steuerwelle 52. An den beiden Stegabschnitten 30 und 31 greift je eine mit einem Ende in eine Federkammer 54 und 55 am Hauptchassis 13 eingeführte, zweifach abgebogene Blattfeder 56 bzw. 57 an. Durch diese Blattfedern 56 und 57 sind die V-förmigen Ansätze 48 und 49 des Trägers 24 zu den ihnen zugeordneten halbkreisförmigen Wellenabschnitten 50 und 51 der Steuerwelle 52 hin belastet.

Die Steuerwelle 52 ist mit Hilfe von zwei Lagern 58 und 59 drehbar gelagert und sie verläuft parallel zu der Ebene 25 durch die Achsen 26 und 27 der beiden Reibräder 14 und 15 und senkrecht zu diesen beiden Achsen 26 und 27. Die Steuerwelle 52 ist aus einer in den Figuren 1 und 2 dargestellten Ausgangslage, in der beide V-förmigen Ansätze 48 und 49 des Trägers 24 an den ihnen zugeordneten nockenförmigen Wellenabschnitten 50 und 51 anliegen und die Antriebswelle 18 von den Reibrädern 14 und 15 abgehoben ist, in entgegengesetzten Drehrichtungen um je 90° in zwei Betriebslagen verdrehbar, in denen je ein V-förmiger Ansatz 48 bzw. 49 des Trägers 24 von dem ihm zugeordneten nockenförmigen Wellenabschnitt 50 bzw. 51 der Steuerwelle 52 unter Auflösung des betreffenden Schwenklagers 41 bzw. 42 abgehoben ist und der andere V-förmige Ansatz 49 bzw. 48 des Trägers 24 an dem ihm zugeordneten nockenförmigen Wellenabschnitt 51 bzw. 50 der Steuerwelle 52 unter Beibehaltung des betreffenden Schwenklagers 42 bzw. 41 anliegt und die Antriebswelle 18 an dem Reibrad 15 bzw. 14 anliegt, das dem Schwenklager 42 bzw. 41 zugeordnet ist, dessen V-förmiger Ansatz 49 bzw. 48 an dem ihm zugeordneten Wellenabschnitt 51 bzw. 50 anliegt. In Fig.3 ist die Steuerwelle 52 in jener Betriebslage dargestellt, in die sie durch Verdrehen aus ihrer Ausgangslage gemäß Fig.2 im Uhrzeigersinn gebracht wird. In dieser Betriebslage ist der V-förmige Ansatz 48 von dem ihm zugeordneten nockenförmigen Wellenabschnitt 50 unter Auflösung des Schwenklagers 41 abgehoben, wie dies aus den Figuren 3 und 4 ersichtlich ist, und liegt der V-förmige Ansatz 49 an dem ihm zugeordneten nockenförmigen Wellenabschnitt 51 unter Beibehaltung des Schwenklagers 42 an, wie dies aus den Figuren 3 und 5 ersichtlich ist. Dadurch, daß der Wellenabschnitt 50 aufgrund seiner nockenförmigen, halbkreisförmigen Ausbildung von dem V-förmigen Ansatz 48 weggedreht ist, wird der Träger 24 unter der Wirkung der Blattfeder 56 so weit verschwenkt, bis die Antriebswelle 18 gegen das Reibrad 15 gedrückt wird. Die Andruckkraft, mit der die Antriebswelle 18 gegen das Reibrad 15 gedrückt wird, ist dabei durch die Kraft der Blattfeder 56 bestimmt, die über die gesamte Lebensdauer praktisch stets gleich groß bleibt. Auf diese Weise ist für die gesamte Lebensdauer eine stets gleichbleibend gute, durch die Kraft der Blattfeder 56 bestimmte Kraftübertragung von der Antriebswelle 18 auf das Reibrad 15 erreicht. Dasselbe gilt für die Kraftübertragung von der Antriebswelle 18 auf das Reibrad 14.

Zur Festlegung der beiden Betriebslagen der Steuerwelle 52 ist mit derselben ein in radialer Richtung abstehender Positionierfortsatz 60 verbunden, der sich in jeder der beiden Betriebslagen an einem von zwei stationären Anschlägen 61 bzw. 62 abstützt, von denen der Anschlag 61 vom Hauptchassis 13 und der Anschlag 62 vom Zusatzchassis 36 absteht. Zum lösbaren Arretieren der Steuerwelle 52 in ihrer Ausgangslage weist das Gerät eine verstellbare Arretiereinrichtung auf, die nachfolgend noch beschrieben ist.

Die Steuerwelle 52 weist zusätzlich zwei kreisscheibenförmige Wellenabschnitte 63 und 64 mit gegenüber der Steuerwelle 52 größerem Durchmesser auf. An den beiden kreisscheibenförmigen Wellenabschnitten 63 und 64 liegt der Träger 24 zu seiner höhenmäßigen Positionierung in Richtung der Achsen 26 und 27 der beiden Reibräder 14 und 15 mit seinen beiden Schenkelabschnitten 28 und 29 an. Auf diese Weise dient die Steuerwelle 52 mit ihren kreisscheibenförmigen Wellenabschnitten 63 und 64 zusätzlich zur Höhenpositionierung des U-förmig ausgebildeten Trägers 24.

Zum Antreiben der Steuerwelle 52 weist dieselbe einen weiteren kreisscheibenförmigen Wellenabschnitt 65 auf, an dem eine ringförmige Filzscheibe 66 beispielsweise durch Kleben befestigt ist. Gegen die Filzscheibe 66 ist mittels einer Druckfeder 67, die sich an eine nicht dargestellten Bund der Steuerwelle 52 abstützt, ein auf der Steuerwelle 52 drehbar gelagertes Zahnrad 68 mit dessen einer Stirnseite gedrückt. Der Wellenabschnitt 65, die Filzscheibe 66 und das Zahnrad 68 bilden eine Rutschkupplung zum Ausgleichen von Hubunterschieden Mit dem Zahnrad 68 steht ein an einer weiteren Welle 69 drehfest vorgesehenes Ritzel 70 in Eingriff. Die Welle 69 ist in zwei Lagern 71 und 72 drehbar gelagert. Weiters ist an der Welle 69 ein Schneckenrad 73 drehfest vorgesehen. Dieses Schneckenrad 73 ist von einer Schnecke 74 antreibbar, die mit der Motorwelle 75 eines in entgegengesetzten Drehrichtungen antreibbaren Steuermotors 76 drehfest verbunden ist.

Zum lösbaren Arretieren der Steuerwelle 52 in ihrer Ausgangslage ist, wie bereits erwähnt, eine verstellbare Arretiereinrichtung 77 vorgesehen. Die Arretiereinrichtung 77 ist durch einen zwei Bremsflächen 78 und 79 zum Bremsen der beiden Reibräder 14 und 15 aufweisenden, verstellbaren Bremsteil für die beiden Reibräder 14 und 15 gebildet. Der Bremsteil 77 ist auf nicht dargestellte Weise senkrecht zur Ebene 25 durch die Achsen 26 und 27 der beiden Reibräder 14 und 15 verstellbar geführt. Mit dem Bremsteil 77 ist bei von den Reibrädern 14 und 15 abgehobenen Bremsflächen 78 und 79 die Steuerwelle 52 gegen Verdrehen arretierbar und der Bremsteil 77 gibt bei an die Reibräder 14 und 15 angelegten Bremsflächen 78 und 79 die Steuerwelle 52 zum Verdrehen frei. Der Bremsteil 77 ist rahmenförmig ausgebildet und weist zwei flach ausgebildete, die Ebene 25 durch die Achsen 26 und 27 der beiden Reibräder 14 und 15 durchsetzende Abschnitte 80 und 81 sowie einen flach ausgebildeten, die beiden Abschnitte 80 und 81 an ihrem von der Steuerwelle 52 abgewandten Ende verbindenden weiteren Abschnitt 82 und einen die beiden Abschnitte 80 und 81 an ihrem der Steuerwelle 52 zugewandten Ende verbindenden, gegenüber den beiden Abschnitten 80 und 81 rechtwinkelig abgewinkelten weiteren Abschnitt 83 auf. An dem abgewinkelten weiteren Abschnitt 83 sind die beiden Bremsflächen 78 und 79 vorgesehen, die hier unmittelbar durch Teile einer den Reibrädern 14 und 15 zugewandten Begrenzungsfläche 84 des abgewinkelten Abschnittes 83 gebildet sind. Von dem flachen weiteren Abschnitt 82 steht mittig ein L-förmig ausgebildeter Haken 85 ab, in den eine Blattfeder 86 eingehängt ist, die sich mit ihren freien Enden an zwei von dem Zusatzchassis 36 abstehenden Anschlägen 87 und 88 abstützt und die danach trachtet, den Bremsteil 77 in Richtung des Pfeiles 89 zu verstellen. Weiters steht von dem flachen weiteren Abschnitt 82 ein Stift 90 ab, der mit dem Tauchanker 91 eines Tauchankermagneten 92 gekoppelt ist. Durch Erregen des Tauchankermagneten 92 wird dessen Tauchanker 91 und von diesem der Bremsteil 77 entgegen der Richtung des Pfeiles 89 gezogen, und zwar so weit, bis sich die an dem abgewinkelten Abschnitt 83 vorgesehenen Bremsflächen 78 und 79 an die Reibräder 14 und 15 anlegen. Wenn der Tauchankermagnet 92 entregt wird, wird der Bremsteil 77 von der Blattfeder 86 in Richtung des Pfeiles 89 verschoben, und zwar so weit, bis sich zwei gabelförmige, von dem abgewinkelten Abschnitt 83 zur Steuerwelle 52 hin abstehende Fortsätze 93 und 94 des Bremsteiles 77 an der Steuerwelle 52 abstützen. Zum Arretieren der Steuerwelle 52 in ihrer Ausgangslage steht von derselben in radialer Richtung ein Arretierfortsatz 95 ab, der bei in ihrer Ausgangslage befindlicher Steuerwelle 52 und zugleich in Richtung des Pfeiles 89 verstelltem Bremsteil 77 in eine Arretiervertiefung 96 im Bremsteil 77 ragt. Hiedurch ist die Steuerwelle 52 sicher in ihrer Ausgangslage und dadurch der Träger 24 sicher in seiner neutralen Mittelposition arretierbar.

Im folgenden ist die Funktionsweise des vorstehend beschriebenen Gerätes erläutert. In einem Ausgangszustand nimmt die Steuerwelle 52 ihre in den Figuren 1 und 2 dargestellte Ausgangslage ein und der Bremsteil 77 ist in der Richtung des Pfeiles 89 so weit verstellt, daß sich die gabelförmigen Fortsätze 93 und 94 an der Steuerwelle 52 abstützen. Dabei ragt der Arretierfortsatz 95 der Steuerwelle 52 in die Arretiervertiefung 96 im Bremsteil 77, wodurch die Steuerwelle 52 vorteilhafterweise in ihrer Ausgangslage gesichert ist, was aber in den Figuren 1 und 2 nicht dargestellt ist. Bei in ihrer Ausgangslage befindlicher Steuerwelle 52 liegen die beiden V-förmigen Ansätze 48 und 49 an den ihnen zugeordneten nockenförmigen Wellenabschnitten 50 und 51 unter der Wirkung der beiden Blattfedern 56 und 57 an, wodurch der Träger 24 vorteilhafterweise sicher in seiner neutralen Mittelposition positioniert ist, in der die Antriebswelle 18 von beiden Reibrädern 14 und 15 abgehoben ist. Um die Steuerwelle 52 in eine ihrer beiden Betriebslagen verdrehen zu können, wird zuerst die durch den Bremsteil gebildete Arretiereinrichtung 77 verstellt. Hiefür wird der Tauchankermagnet 92 erregt, wodurch der Bremsteil 77 entgegen der Richtung des Pfeiles 89 entgegen der Kraft der Blattfeder 86 verschoben wird, bis die Bremsflächen 78 und 79 an den beiden Reibrädern 14 und 15 anliegen und diese dadurch vorteilhafterweise festbremsen, wobei sich dann der Arretierfortsatz 95 der Steuerwelle 52 außerhalb der Arretiervertiefung 96 im Bremsteil 77 befindet, wie dies in den Figuren 1 und 2 dargestellt ist. Somit kann nachfolgend die nicht mehr arretierte Steuerwelle 52 verdreht werden. Um beispielsweise die Antriebswelle 18 mit dem Reibrad 15 in Antriebsverbindung zu bringen, wie dies für die Betriebsart "Normaler Vorlauf" erforderlich ist, wird der Steuermotor 76 für eine vorgegebene Zeitdauer in einer vorgegebenen Drehrichtung angetrieben, wodurch der Steuermotor 76 über die Schnecke 74 und das Schneckenrad 73 sowie das Zahnrad 70 und die Rutschkupplung 68, 66 und 65 die Steuerwelle 52 aus ihrer Ausgangslage gemäß Fig.2 im Uhrzeigersinn antreibt. Dadurch wird die Steuerwelle 52 um 90° im Uhrzeigersinn verdreht, bis der Positionierfortsatz 60 der Steuerwelle 52 an dem vom Hauptchassis 13 abstehenden Anschlag 61 anliegt, wobei die Rutschkupplung 68, 66 und 65 einen Überhub des Steuermotors 76 ausgleicht. Bei dieser Verdrehung der Steuerwelle 52 bleibt der V-förmige Ansatz 49 des Trägers 24 zur Bildung des Schwenklagers 42 in Anlage an dem nockenförmigen Wellenabschnitt 51, jedoch gibt der andere nockenförmige Wellenabschnitt 50 den anderen V-förmigen Ansatz 48 frei, wodurch unter der Wirkung der Blattfeder 56 der Träger 24 um das Schwenklager 42 gemäß Fig.1 entgegen dem Uhrzeigersinn verschwenkt wird, bis die Antriebswelle 18 an dem Reibrad 15 anliegt, wie dies in Fig.3 dargestellt ist. Die Antriebswelle 18 greift dann am Reibrad 15 vorteilhafterweise unter einem rechten Winkel an, wie dies bereits vorstehend beschrieben wurde. Danach wird der Tauchankermagnet 92 wieder entregt, wodurch der Bremsteil 77 unter der Wirkung der Blattfeder 86 in Richtung des Pfeiles 89 verschoben wird, bis sich die gabelförmigen Fortsätze 93 und 94 des Bremsteiles 77 an der Steuerwelle 52 abstützen, wobei sich dann aber der nunmehr gegenüber der Ausgangslage um 90° verdrehte Arretierfortsatz 95 außerhalb der Arretiervertiefung 96 im Bremsteil 77 befindet. Durch die Verstellung des Bremsteiles 77 in Richtung des Pfeiles 89 werden die Bremsflächen 78 und 79 von den Reibrädern 14 und 15 abgehoben, so daß diese dann nicht mehr festgebremst sind. Danach wird der Motor 23 gemäß Fig.1 im Uhrzeigersinn angetrieben, wodurch der Motor 23 über den Pesenantrieb 21, 20 und 19 die Antriebswelle 18 im Uhrzeigersinn und die Antriebswelle 18 das Reibrad 15 und folglich den Wickeldorn 10 und den Wickelkern 4 entgegen dem Uhrzeigersinn antreibt.

Um den Antrieb des Wickelkernes 4 wieder zu beenden und die Antriebswelle 18 von dem Reibrad 15 wieder abzuheben, erfolgt der sinngemäß umgekehrte Vorgang. Zuerst wird der Motor 23 abgeschaltet. Danach wird der Tauchankermagnet 92 erregt und dadurch der Bremsteil 77 entgegen der Richtung des Pfeiles 89 verschoben, wodurch die aufgrund des vorherigen Antreibens des Magnetbandes noch rotierenden Reibräder 14 und 15 festgebremst werden. Danach wird der Steuermotor 76 eingeschaltet, und zwar so, daß die Steuerwelle 52 in ihre Ausgangslage zurückverdreht wird. Sobald die Steuerwelle 52 ihre Ausgangslage erreicht hat, wird der Tauchankermagnet 92 wieder entregt, wodurch der Bremsteil 77 von der Blattfeder 86 in Richtung des Pfeiles 89 verschoben wird und dabei die Steuerwelle 52 mittels der Arretiervertiefung 96 und dem Arretierfortsatz 95 in ihrer Ausgangslage arretiert wird.

Um die Antriebswelle 18 mit dem Reibrad 14 in Antriebsverbindung zu bringen, erfolgt der analoge Vorgang wie vorstehend beschrieben, nur wird der Steuermotor 76 in der anderen Drehrichtung angetrieben, wodurch die Steuerwelle 52 aus ihrer Ausgangslage gemäß Fig.2 entgegen dem Uhrzeigersinn um 90° verdreht wird, bis der Positionierfortsatz 60 der Steuerwelle 52 an dem vom Zusatzchassis 36 abstehenden Anschlag 62 anliegt. In diesem Fall bleibt dann der V-förmige Ansatz 48 unter Beibehaltung des Schwenklagers 41 an dem nockenförmigen Wellenabschnitt 50 in Anlage und hebt der andere nockenförmige Wellenabschnitt 51 von dem anderen V-förmigen Ansatz 49 unter Auflösung des Schwenklagers 42 ab, so daß der Träger 24 unter der Wirkung der Blattfeder 57 um das Schwenklager 41 gemäß Fig.1 im Uhrzeigersinn verschwenkt wird, bis die Antriebswelle 18 am Reibrad 14 anliegt, wobei auch in diesem Fall die Antriebswelle 18 vorteilhafterweise unter einem rechten Winkel an dem Reibrad 14 angreift, wie dies bereits vorstehend erläutert ist.

## Patentansprüche

1. Aufzeichnungs- und/oder Wiedergabegerät für einen bandförmigen Aufzeichnungsträger (5), der zwischen zwei nebeneinanderliegenden, rotierend antreibbaren Wickelkernen (3,4) verläuft, mit zwei zum Antreiben der Wickelkerne (3,4) vorgesehenen, rotierend antreibbaren Wickeldornen (9,10) und mit zwei je mit einem der beiden Wickeldorne (9,10) in Antriebsverbindung stehenden, nebeneinanderliegenden Reibrädern (14,15), die umfangsseitig von einem rotierend antreibbaren, kraftschlüssig wirksamen Antriebsteil (18) wahlweise antreibbar sind, der auf einem mittig bezüglich der beiden Reibräder (14,15) angeordneten verschwenkbaren Träger (24) drehbar gelagert ist und der durch Verschwenken des Trägers (24) wahlweise mit einem der beiden Reibräder (14,15) umfangsseitig in kraftschlüssige Antriebsverbindung bringbar ist und der bei hergestellter kraftschlüssiger Antriebsverbindung unter Federkraft an dem betreffenden Reibrad (14,15) anliegt, dadurch gekennzeichnet, daß der Träger (24) um zwei mit Abstand voneinander liegende verstellbare Schwenklager (41,42) verschwenkbar ist, von denen jedes Schwenklager (41,42) einem der beiden Reibräder (14,15) zugeordnet ist, und daß bei mit einem der beiden Reibräder (14,15) in kraftschlüssiger Antriebsverbindung stehendem Antriebsteil (18) eine Ebene (46) durch die Achse (43) des Antriebsteiles (18) und die Achse (44,45) des dem betreffenden Reibrad (14,15) zugeordneten Schwenklagers (41,42) des Trägers (24) im wesentlichen senkrecht zu einer Ebene (47) durch die Achse (43) des Antriebsteiles (18) und die Achse (26,27) des betreffenden Reibrades (14,15) verläuft.

2. Gerät nach Anspruch 1, dadurch gekennzeichnet, daß die beiden verstellbaren Schwenklager (41,42) des Trägers (24) je durch einen im Querschnitt im wesentlichen V-förmigen Ansatz (48,49) des Trägers (24) und einen diesem zugeordneten, im Querschnitt nockenförmigen Wellenabschnitt (50,51) einer das Verstellen der Schwenklager (41,42) und damit des Trägers (24) steuernden Steuerwelle (52) gebildet sind, die parallel zu einer Ebene (25) durch die Achsen (26,27) der beiden Reibräder (14,15) und senkrecht zu diesen Achsen (26,27) verlaufend im Gerät drehbar gelagert ist, daß die Ansätze (48,49) des Trägers (24) durch mindestens eine an dem Träger (24) angreifende Feder (56,57) zu den ihnen zugeordneten nockenförmigen Wellenabschnitten (50,51) der Steuerwelle (52) hin belastet sind und daß die Steuerwelle (52) aus einer Ausgangslage, in der beide Ansätze (48,49) des Trägers (24) an den ihnen zugeordneten nockenförmigen Wellenabschnitten (50,51) anliegen und der Antriebsteil (18) von den beiden Reibrädern (14,15) abgehoben ist, in zwei Betriebslagen verdrehbar ist, in denen je ein Ansatz (48,49) des Trägers (24) von dem ihm zugeordneten nockenförmigen Wellenabschnitt (50,51) abgehoben ist und der andere Ansatz (48,49) des Trägers (24) an dem ihm zugeordneten Wellenabschnitt (50,51) anliegt und der Antriebsteil (18) an dem Reibrad (14,15) anliegt, das dem Schwenklager (41,42) zugeordnet ist, dessen Ansatz (48,49) an dem ihm zugeordneten Wellenabschnitt (50,51) anliegt.

3. Gerät nach Anspruch 2, dadurch gekennzeichnet, daß der Träger (24) im wesentlichen U-förmig ausgebildet ist und zwei senkrecht zu der Ebene (25) durch die Achsen (26,27) der beiden Reibräder (14,15) verlaufende Schenkelabschnitte (28,29) und mindestens einen die beiden Schenkelabschnitte (28,29) miteinander verbindenden, in Richtung der Achsen (26,27) der beiden Reibräder (14,15) verlaufenden Stegabschnitt (30,31) aufweist, daß die Steuerwelle (52) zwischen den beiden Schenkelabschnitten (28,29) des Trägers (24) und benachbart zu dem Stegabschnitt (30,31) des Trägers (24) angeordnet ist und daß die beiden im wesentlichen V-förmigen Ansätze (48,49) des Trägers (24) an dem Stegabschnitt (30,31) des Trägers (24) vorgesehen sind.

4. Gerät nach Anspruch 3, dadurch gekennzeichnet, daß die Steuerwelle (52) zusätzlich mindestens einen kreisscheibenförmigen Wellenabschnitt (63,64) mit gegenüber der Steuerwelle (52) größerem Durchmesser aufweist, an dem der Träger (24) zu seiner Positionierung in Richtung der Achsen (26,27) der beiden Reibräder (14,15) mit mindestens einem seiner beiden Schenkelabschnitte (28,29) anliegt.

5. Gerät nach Anspruch 4, dadurch gekennzeichnet, daß eine verstellbare Arretiereinrichtung (77) zum Arretieren der Steuerwelle (52) in ihrer Ausgangslage vorgesehen ist, mit der in der Ausgangslage der Steuerwelle (52) dieselbe gegen Verdrehen arretierbar ist.

6. Gerät nach Anspruch 5, dadurch gekennzeichnet, daß die Arretiereinrichtung (77) durch einen zwei Bremsflächen (78,79) zum Bremsen der beiden Reibräder (14,15) aufweisenden verstellbaren Bremsteil für die beiden Reibräder (14,15) gebildet ist, mit dem bei von den Reibrädern (14,15) abgehobenen Bremsflächen (78,79) die Steuerwelle (52) gegen Verdrehen arretierbar ist und der bei an die Reibräder (14,15) angelegten Bremsflächen (78,79) die Steuerwelle (52) zum Verdrehen freigibt.

## Claims

1. A recording and/or reproducing apparatus for a record carrier (5) in the form of a tape, which extends between two juxtaposed rotationally drivable reel hubs (3, 4), the apparatus having two rotationally drivable winding spindles (9, 10) for driving the reel hubs (3, 4), and having two juxtaposed friction wheels (14, 15), which are each in driving engagement with one of the two winding spindles (9, 10) and which are selectively drivable at their circumference by a rotationally drivable frictional drive member (18), which is rotatably mounted on a pivotable support (24) disposed centrally in relation to the two friction wheels (14, 15) and which can selectively be brought circumferentially into frictional driving engagement with one of the two friction wheels (14, 15) by a pivotal movement of the support (24) and which, with the frictional driving engagement established, engages with the relevant friction wheel (14, 15) under spring force, characterised in that the support (24) is pivotable about two movable spaced-apart pivots (41, 42), of which each pivot (41, 42) is associated with one of the two friction wheels (14, 15), and in that when the drive member (18) is in frictional driving engagement with one of the two friction wheels (14, 15) a plane (46) containing the axis (43) of the drive member (18) and the axis (44, 45) of the pivot (41, 42) associated with the relevant friction wheel (14, 15) extends substantially perpendicularly to a plane (47) containing the axis (43) of the drive member (18) and the axis (26, 27) of the relevant friction wheel (14, 15).

2. An apparatus as claimed in Claim 1, characterised in that the two controllable pivots (41, 42) of the support (24) are each formed by a shoulder (48, 49) of substantially V-shaped cross-section on the support (24) and a shaft portion (50, 51) of a control shaft (52), which shaft portion is of cam-shaped cross-section and is associated with said shoulder, which control shaft controls the actuation of the pivots (41, 42) and hence of the support (24) and is rotatably mounted in the apparatus so as to extend parallel to a plane (25) containing the axes (26, 27) of the two friction wheels (14, 15) and perpendicularly to these axes (26, 27), in that the shoulders (48, 49) of the support (24) are urged towards the associated cam-shaped shaft portions (50, 51) of the control shaft (52) by at least one spring (56, 57) acting on the support (24), and in that the control shaft (52) is rotatable from an initial position, in which both shoulders (48, 49) of the support (24) engage with the associated cam-shaped shaft portions (50, 51) and the drive member (18) is clear of the two friction wheels (14, 15), into two operating positions, in each of which one shoulder (48, 49) of the support (24) is clear of the associated cam-shaped shaft portion (50, 51) and the other shoulder (48, 49) of the support (24) engages with the associated shaft portion (50, 51) and the drive member (18) engages with the friction wheel (14, 15) associated with the pivot (41, 42) whose shoulder (48, 49) engages with the associated shaft portion (50, 51).

3. An apparatus as claimed in Claim 2, characterised in that the support (24) is substantially U-shaped and has two limbs (28, 29), which extend perpendicularly to the plane (25) containing the axes (26, 27) of the two friction wheels (14, 15), and at least one web portion (30, 31), which interconnects the two limbs (28, 29) and which extends in the direction of the axes (26, 27) of the two friction wheels (14, 15), in that the control shaft (52) is arranged between the two limbs (28, 29) of the support (24) and adjacent the web portion (30, 31) of the support (24), and in that the two substantially V-shaped shoulders (48, 49) of the support (24) are disposed on the web portion (30, 31) of the support (24).

4. An apparatus as claimed in Claim 3, characterised in that the control shaft (52) in addition has at least one disc-shaped shaft portion (63, 64) of larger diameter than the control shaft (52), against which the support (24) engages with at least one of its two limbs (28, 29) in order to position said support in the direction of the axes (26, 27) of the two friction wheels (14, 15).

5. An apparatus as claimed in Claim 4, characterised in that there is provided a movable locking device (77) for locking the control shaft (52) in its initial position, with which the control shaft (52) can be locked against rotation in the initial position of said control shaft.

6. An apparatus as claimed in Claim 5, characterised in that the locking device (77) is formed by a movable braking member for the two friction wheels (14, 15), which braking member has two braking surfaces (78, 79) for braking the two friction wheels (14, 15), with which the control shaft (52) can be locked against rotation when the braking surfaces (78, 79) are clear of the friction wheels (14, 15) and which allows rotation of the control shaft (52) when the braking surfaces (78, 79) engage with the friction wheels (14, 15).

## Revendications

1. Appareil d'enregistrement et/ou de reproduction pour un support d'information en forme de bande (5) s'étendant entre deux axes d'enroulement juxtaposés (3, 4) qui peuvent être portés à rotation, muni de deux noyaux d'enroulement (9, 10) pouvant être portés à rotation et prévus pour l'entraînement des axes d'enroulement (3, 4) et de deux roues de friction juxtaposées (14, 15) qui sont en relation d'entraînement avec l'un des noyaux d'enroulement (9, 10) et qui peuvent être entraînés au besoin circonférentiellement par une pièce d'entraînement (18) agissant par force et pouvant être portés à rotation, qui repose de façon rotative sur un support pivotant (24) disposé de façon centrale par rapport aux deux roues de friction (14, 15) et qui peut être porté, par pivotement du support (24), au choix et circonférentiellement, en relation d'entraînement par force avec l'une des deux roues de friction (14, 15) et qui s'applique, dans le cas de relation d'entraînement par force, sous l'effet de force élastique contre la roue de friction (14, 15) en question, caractérisé en ce que le support (24) peut pivoter autour de deux paliers de pivotement réglables espacés (41, 42), dont chaque palier de pivotement est attribué à l'une des deux roues de friction (14, 15), et en ce que dans le cas où la pièce d'entraînement (18) est en relation d'entraînement par force avec l'une des deux roues de friction (14, 15), un plan (46) passe par l'axe (43) de la pièce d'entraînement (18) et l'axe (44, 45) du palier de pivotement (41, 42) du support (24) attribué à la roue de friction (14, 15) en question, d'une façon essentiellement perpendiculaire à un plan (47) passant par l'axe (43) de la pièce d'entraînement (18) et l'axe (26, 27) de la roue de friction (14, 15) en question.

2. Appareil selon la revendication 1, caractérisé en ce que les deux paliers de pivotement réglables (41, 42) du support (24) sont formés chacun par une saillie d'une section essentiellement en V (48, 49) du support (24) et une partie d'arbre (50, 51), d'une section en forme de came correspondant à ladite saillie, d'un arbre de commande (52) commandant le réglage du palier de pivotement (41, 42) et, de ce fait, du support (24) et reposant de façon rotative dans l'appareil de façon à s'étendre parallèlement à un plan (25) passant par les axes (26, 27) des deux roues de friction (14, 15) et perpendiculairement à ces axes (26, 27), que les saillies (48, 49) du support (24) sont chargées par au moins un ressort (56, 57) agissant sur le support (24) vers la partie d'arbre en forme de came correspondante (50, 51) de l'arbre de commande (52) et que l'arbre de commande (52) peut être tourné à partir d'une position de départ dans laquelle les deux saillies (48, 49) du support (24) s'appliquent contre les parties d'arbre en forme de came correspondantes (50, 51) et la pièce d'entraînement (18) est écartée des deux roues de friction (14, 15), dans deux positions de fonctionnement, dans lesquelles chaque fois une saillie (48, 49) du support (24) est écartée de la partie d'arbre en forme de came correspondante (50, 51) et l'autre saillie (48, 49) du support (24) s'applique contre la partie d'arbre correspondante (50, 51) et la pièce d'entraînement (18) s'applique contre la roue de friction (14, 15) attribuée au palier de pivotement (41, 42) dont la saillie (48, 49) s'applique contre la partie d'arbre correspondante (50, 51).

3. Appareil selon la revendication 2, caractérisé en ce que le support (24) est essentiellement en forme d'U et présente deux parties de bras (28, 29) s'étendant perpendiculairement au plan (25) par les axes (26, 27) des deux roues de friction (14, 15) et au moins une partie intermédiaire (30, 31) reliant les parties de bras (28, 29) entre elles et s'étendant dans la direction des axes (26, 27) des deux roues de friction (14, 15), en ce que l'arbre de commande (52) est disposé entre les deux parties de bras (28, 29) du support (24) et avoisine la partie intermédiaire (30, 31) du support (24) et en ce que les deux saillies essentiellement en V (48, 49) du support (24) sont prévues à la partie intermédiaire (30, 31) du support (24).

4. Appareil selon la revendication 3, caractérisé en ce que l'arbre de commande (52) est en outre muni d'au moins une partie d'arbre en forme de disque circulaire (63, 64) présentant un plus grand diamètre par rapport de l'arbre de commande (52) contre laquelle s'applique le support (24) par au moins l'une de ses deux parties de bras (28, 29) pour son positionnement dans la direction des axes (26, 27) des deux roues de friction (14, 15).

5. Appareil selon la revendication 4, caractérisé en ce qu'un dispositif de blocage réglable (77) servant à bloquer l'arbre de commande (52) dans sa position de départ est prévu et permet de bloquer l'arbre de commande (52) dans sa position de départ contre la rotation.

6. Appareil selon la revendication 5, caractérisé en ce que le dispositif de blocage (77) est formé par une pièce de freinage réglable présentant deux faces de freinage (78, 79) servant à freiner les deux roues de friction (14, 15) à l'aide de laquelle l'arbre de commande (52) est bloqué contre la rotation lorsque les faces de freinage (78, 79) sont écartées des roues de friction (14, 15) et qui libère l'arbre de commande (52) pour la rotation lorsque les faces de freinage (78, 79) s'appliquent contre les roues de friction (14, 15).
